# EUROPEAN PATENT SPECIFICATION

(11) **EP 2 978 543 B1**
(45) Date of publication and mention of the grant of the patent: **03.05.2017**
(21) Application number: 14718442.8
(22) Date of filing: 24.03.2014
(51) Int. Cl.: B08B 17/00, B05B 1/24, B05B 1/20, B65G 69/18, B02C 21/02, B02C 23/18

(54) **METHOD AND SYSTEM FOR DUST BINDING OF MINERAL MATERIAL IN A MINERAL MATERIAL PROCESSING PLANT**
VERFAHREN UND SYSTEM ZUM BINDEN VON STAUB VON MINERALISCHEM MATERAL IN EINER ANLAGE ZUR VERARBEITUNG EINES MINERALISCHEN MATERIALS
PROCÉDÉ ET SYSTÈME POUR LIER DE LA POUSSIÈRE DE MATIÈRE MINÉRALE DANS UNE USINE DE TRAITEMENT DE MATIÈRE MINÉRALE

(30) Priority: 28.03.2013 FI 20135301
(43) Date of publication of application: 03.02.2016
(73) Proprietor: Metso Minerals, Inc., 00100 Helsinki (FI)
(72) Inventor: HEIKKILÄ, Juhamatti, FI-33710 Tampere (FI); MUSTONEN, Timo, FI-33820 Tampere (FI); NIEMI, Harri, FI-33580 Tampere (FI); RANTA, Niko, FI-61880 Ikkeläjärvi (FI)
(74) Representative: Espatent Oy
(86) International application number: PCT/FI2014/050212
(87) International publication number: WO 2014/154944

(56) References cited:
- DE-A1-102012 002 032
- DE-C- 387 771
- DE-U1-202004 012 678
- GB-A- 2 183 175
- JP-A- S6 220 752
- US-A- 5 116 634
- DATABASE WPI Week 201326 Thomson Scientific, London, GB; AN 2013-E02998 XP002726784, & CN 202 655 163 U (QINHUANGDAO STAR LIGHT TECHNOLOGY CO LTD) 9 January 2013 (2013-01-09) & CN 202 655 163 U (QINHUANGDAO STAR LIGHT TECHNOLOGY CO LTD) 9 January 2013 (2013-01-09)
- DATABASE WPI Week 200934 Thomson Scientific, London, GB; AN 2009-B55713 XP002726785, & CN 201 023 083 Y (QINGHUANGDAO SITAI YIDA SCI & TECHNOLOGY DEV LTD) 20 February 2008 (2008-02-20) & CN 201 023 083 Y (QINHUANGDAO SITAI YIDA DEV OF [CN]) 20 February 2008 (2008-02-20)

## Description

### TECHNICAL FIELD

The invention relates to a method, a system and a mineral material processing plant. The invention relates particularly, though not exclusively, to defrosting of a dust binding system of a movable mineral material processing plant in cold circumstances.

### BACKGROUND ART

Mineral material, for example rock, is gained from the earth for processing by exploding or excavating. The mineral material can also be natural rock and gravel or construction waste such as concrete or bricks, or asphalt. Mobile crushers and stationary crushing applications are used in crushing. An excavator or wheeled loader loads the material to be crushed into the crusher's feed hopper from where the material to be crushed may fall in a crushing chamber of a crusher or a feeder moves the rock material towards the crusher.

A mineral material processing plant comprises one or more crushers and/or screen and possibly other apparatuses such as conveyors. The processing plant may be stationary or movable. Particularly the movable processing plants are used in urban environment for handling of recyclable material such as construction waste, or at open pits for crushing and/or screening of rock material.

The capacity of the processing plant is tried to make use of economically in full scale so that the processing plant is used continuously. Interruptions in the processing decrease efficiency and crushing time. The use of the processing plants is regulated by administrative orders because of dust emissions particularly in the urban environment.

The dust which is spreading to the environment from the mineral material processing such as feeding, screening, crushing and conveying is prevented in order to reduce adverse environmental effects and maximize the crushing time of a crushing plant.

The dust prevention of processing plants such as crushing plants is often based on water spraying. The crushing plant normally comprises 6 to 10 nozzles. Water is sprayed to dusting points of the process such as the crushing chamber of the crusher or onto the mineral material for example with high pressure of 30 bar about 200 to 300 l/h or with low pressure of 4 bar about the fourfold relative to the previous. In cold circumstances the dust binding which is based on water causes additional costs and requires use of heating solutions and possible additional agents.

In winter operation a problem is freezing of a high pressure nozzle what can take place even in case the water is pre-heated. The freezing of the nozzle takes place even in a few seconds. The high pressurized water can open part of the nozzles but typically part of the nozzles may keep closed because the pressure is released from the open nozzles. A so called trace heating is previously used for high pressure hoses wherein a resistance cable and a water hose are located inside a common thermal insulation. The electrical trace heating of the water hoses is not able to unfreeze the water nozzle.

An object of the invention is to provide a method and a system for dust binding and a processing plant by which drawbacks present in connection with prior art can be eliminated or at least reduced. A particular object of the invention is to intensify dust prevention in cold conditions. A particular object of the invention is to reduce and eliminate problems caused by freezing in the dust binding based on water spraying. A particular object of the invention is to enable as long as possible efficient processing time.

### SUMMARY

According to a first example aspect of the invention there is provided method in accordance with claim 1 for dust binding of mineral material in a mineral material processing plant, the method comprising conducting dust binding liquid through an inlet channel and a nozzle block to a nozzle which is fixed to the nozzle block, and spraying dust binding liquid through the nozzle to a dust binding target to bind dust generated in mineral material processing, and heating the dust binding liquid, the nozzle block and the nozzle by a glow plug which is fixed to the nozzle block.

Preferably conducting the dust binding liquid to flow to the nozzle through a first flow space which is formed to the nozzle block.

Preferably conducting the dust binding liquid to flow through the first flow space to a first flow space formed to a following nozzle block.

Preferably locating a tip of the glow plug to a first flow space formed to the nozzle block.

Preferably forming a second flow space to the nozzle block, the second flow space being separate to the first flow space, and conducting a flow of a liquid heated in a heat source of the processing plant through the second flow space, preferably a return flow of a hydraulic liquid. Preferably additionally locating a tip of a second glow plug to the second flow space. By the heat source is meant in this description an apparatus of the processing plant participating directly or indirectly in heat generation such as a motor, a lubricating apparatus, hydraulics.

Preferably forming the nozzle block of a material which has a good thermal conductivity. The nozzle block can be manufactured of brass.

Preferably arranging the dust binding liquid to circulate through nozzle blocks in a closed flow circuit. Preferably the volume of the flow circuit is limited small, for example to some tens of liters. The limited volume and the circuiting of the dust binding liquid enables a quick and energy efficient heating of the dust binding liquid for example in connection with starting. The limited volume and the circuiting of the dust binding liquid enables a small consumption of a freezing agent for example in connection with starting and/or stopping of a dust binding system.

Preferably arranging a trace heating cable in connection with a dust binding liquid flow channel. For example the inlet channel and intermediate channels between the nozzle blocks are flow channels.

Preferably limiting (lowering) a voltage of the glow plug by coupling a trace heating cable as a pre-resistor for the glow plug, preferably a self-regulating DC-voltage resistance cable, the trace heating cable being arranged in connection with a dust binding liquid flow channel.

Preferably heating the glow plug when a nozzle fixed to the same nozzle block is blocked because of freezing. The glow plug can be heated in connection with the starting and/or the stopping of the dust binding (the starting and/or the stopping of the dust binding system). The glow plug can be heated as a precaution in order to prevent freezing.

According to a second example aspect of the invention there is provided a system in accordance with claim 9 for binding dust generated in processing of mineral material in a mineral material processing plant, the system comprising an inlet channel, a nozzle block and a nozzle for spraying dust binding liquid, and the inlet channel and the nozzle are fixed to the nozzle block, and a glow plug controllable by electrical control means is fixed to the nozzle block for heating the dust binding liquid, the nozzle block and the nozzle.

Preferably a first flow space is formed to the nozzle block for distributing dust binding liquid to the nozzle and a tip of the glow plug is located to the first flow space. Preferably the tip of the glow plug is equipped with an electrical heating element such as an electrical heating resistor. Preferably the heating element is located inside the tip of the glow plug. Preferably the glow plug comprises a longitudinal tip which is extendible to the first flow space to be surrounded by the dust binding liquid.

Preferably the dust binding liquid is arranged to flow through the first flow space of the nozzle block to a first flow space formed to a following nozzle block.

Preferably a second flow space is arranged to the nozzle block, the second flow space being separate from the first flow space, for through-flow of a liquid heated in a heat source of the processing plant.

Preferably the nozzle block is formed of a material which has a good thermal conductivity, preferably of brass.

Preferably the system comprises a closeable dust binding liquid flow circuit which comprises flow channels, nozzle blocks, a container and a pump.

Preferably in the system the dust binding liquid is configured to circulate through nozzle blocks.

Preferably a trace heating cable is arranged in connection with a dust binding liquid flow channel. Preferably the trace heating cable is of a self-regulating DC-voltage resistance cable.

Preferably the electrical control means comprise a trace heating cable which is connected as a pre-resistor for the glow plug.

According to a third example aspect of the invention there is provided a mineral material processing plant in accordance with claim 15 comprising at least one mineral material processing apparatus and a system for dust binding according to any embodiment of the invention.

According to one aspect there is provided a method and a system for mineral material dust binding in a mineral material processing plant. Dust binding liquid is conducted through an inlet channel and a nozzle block to a nozzle which is fixed to the nozzle block and dust binding liquid is sprayed through the nozzle to a dust binding target to bind dust generated in mineral material processing. The dust binding liquid is conducted to flow to the nozzle through a first flow space which is formed to the nozzle block and to a first flow space formed to a following nozzle block. The dust binding liquid flowing through the nozzle block helps in defrosting of the nozzle. In this solution a second flow space, being separate from the first flow space, can additionally be formed to the nozzle block, and a flow of a liquid heated in a heat source of the processing plant can be conducted through the second flow space, preferably a return flow of a hydraulic liquid. The through-flow in the nozzle block of the liquid heated in the heat source helps in defrosting of a high pressure nozzle.

Preferably the processing plant is a movable processing plant comprising a feeder and/or a screen and/or a crusher and/or a conveyor.

Preferably the nozzle is a high pressure nozzle.

Mineral material processing is for example feeding and/or screening and/or crushing and/or conveying by a conveyor of mineral material.

A technical advantage of different embodiments of the invention is improvement of the dust binding of the mineral material processing plant. Further a technical advantage of different embodiments of the invention is increase of efficient operation time of the mineral material processing plant.

Mineral material processing can be implemented more economically than known by utilizing the surplus energy generated in the process. External heating of the water used for the dust binding in cold conditions can be avoided or reduced wherein the energy consumption is decreasing. The nozzles can be defrosted in cold conditions, for example together with the trace heating, by the return flow or a leakage flow of the hydraulics heated with surplus energy wherein the energy consumption decreases and the reliability of the process increases.

Good experiences received of high pressure spraying can now be implemented reliably also in cold conditions. The dust binding spraying can be safeguarded against freezing, and thanks to the high pressure spraying water consumption remains low wherein use of a defrosting chemical mixed with water in some special cases can also be avoided or at least reduced. Energy is saved remarkably when the heating of water used in dust binding can be reduced.

The heating of the nozzle and the nozzle block is a very relevant factor in enabling the dust binding in winter conditions. The glow plug provides a very cheap commercially available component for the defrosting of the high pressure nozzles. The solution can easily be made use of as retrofittings in previously supplied processing plants.

Surface tension of water decreases when the temperature increases, this having advantageous effects to the operation of the nozzle, the fineness of the water mist and the dust binding efficiency. When the temperature and/or the pressure rise sufficiently, water vapor is formed by which an efficient dust binding can be achieved with small water consumption.

In vehicle industry the glow plugs are particularly used for diesel motor starting aid. The heat generated in the glow plug is directed to the cylinder of the diesel motor. The availability of the glow plugs is good thanks to the large use thereof.

Different embodiments of the present invention will be illustrated or have been illustrated only in connection with some aspects of the invention. A skilled person appreciates that any embodiment of an aspect of the invention may apply to the same aspect of the invention and other aspects alone or in combination with other embodiments as well, as defined by the appended claims.

### BRIEF DESCRIPTION OF THE DRAWINGS

The invention will be described, by way of example, with reference to the accompanying schematical drawings, in which:
Fig. 1 shows a system for dust binding according to a first embodiment of the invention;
Figs. 2a and 2b show a nozzle assembly according to a first embodiment of the invention;
Fig. 3a shows a nozzle assembly according to a second embodiment of the invention;
Fig. 3b shows a nozzle assembly according to a modification of the second embodiment of the invention;
Fig. 4 shows a system for dust binding according to a second embodiment of the invention; and
Fig. 5 shows a mineral material processing plant comprising a system for dust binding according to an embodiment of the invention.

### DETAILED DESCRIPTION

In the following description, like numbers denote like elements. It should be appreciated that the illustrated drawings are not entirely in scale, and that the drawings mainly serve the purpose of illustrating some example embodiments of the invention.

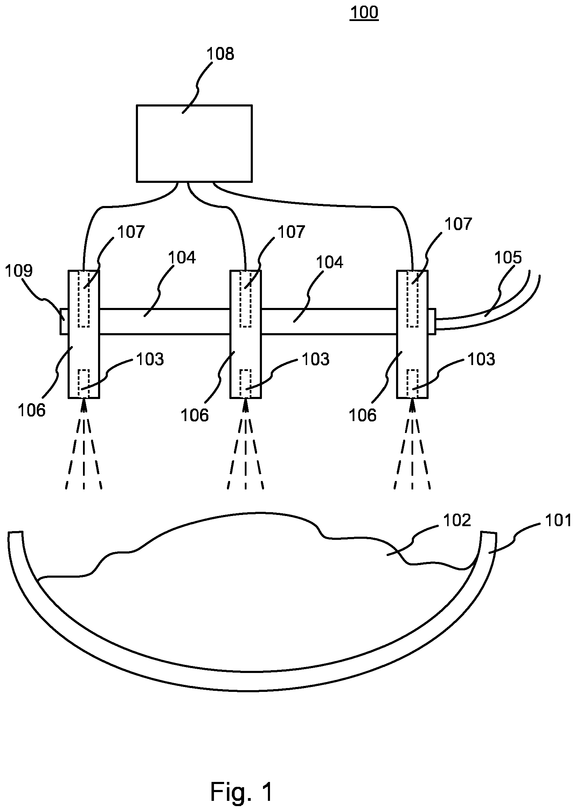

Fig. 1 shows an example of a dust binding system 100 having high pressure nozzles 103 from which dust binding liquid is sprayed to bind the dust spreading with air flow from a processed mineral material. In the following description the term nozzle is used in substitution of the term high pressure nozzle. The dust binding system can be equipped with high pressure or low pressure nozzles. The nozzles 103 are by way of example located above a conveyor belt 101 and the mineral material 102 conveyed on the belt. Nozzles 103 can also be arranged in connection with a crushing chamber and if necessary in connection with other processing apparatuses such as for example a feeder or a screen.

The system 100 comprises for example 3 to 10 nozzles 103 each being fixed to a nozzle block 106, and a glow plug 107 is fixed for each nozzle to the nozzle block. The system 100 comprises an inlet channel 105 for the liquid to be sprayed. In Fig. 1, the inlet channel 105 is arranged preferably to the first nozzle (to the first nozzle block), from where the flow of the dust binding liquid continues through the nozzle block to the following nozzle (to the following nozzles/nozzle blocks) via an intermediate channel 104 (intermediate channels). In that nozzle block from where a main flow continues through the nozzle block, a small part of the flow is distributed to the nozzle 103. Then the dust binding liquid used in the system flows through the nozzle blocks as a through-flow wherein a termination of the flow at any nozzle can be minimized or avoided. Thanks to the through-flow in the nozzle block the flow near each nozzle can be increased compared to a situation in which the flow is conducted only through the nozzle 103.

Fig. 1 shows for simplicity three nozzles successively, the locating of the nozzles in parallel or in series or the number of the nozzles not limiting in any way the scope, the interpretation or possible implementations of the invention.

Naturally the inlet channel can be connected directly to more than one nozzles (nozzle blocks). For example a separate inlet channel can be connected to each nozzle of the dust binding system (not shown in the figures) wherein no dust binding liquid through-flow is formed through the nozzle block to the following nozzle block. Part of the nozzle blocks in the dust binding system can be connected through-flowingly from the nozzle block to the following and the flow may terminate to part of the nozzle blocks. The flow terminates at the nozzle 103 located in the left side in Fig. 1.

In the system the dust binding liquid is preferably additionally arranged to circulate in a circuit formed by for example the inlet channel, intermediate channels, a container and a pump (not shown in the figures). In cold conditions operation the amount of the circulating dust binding liquid can be limited and a partially closed circuit of the dust binding liquid to be sprayed can be formed (for example 50 liters) to which new dust binding liquid is added the same amount as sprayed. The consumption of defrosting agent used if necessary is also low in that case, because the amount of defrosting agent required by the partially closed circuit can be added. When the volume of the partially closed circuit is limited, also the energy amount used for possible (pre-)heating of that limited liquid amount can be restricted.

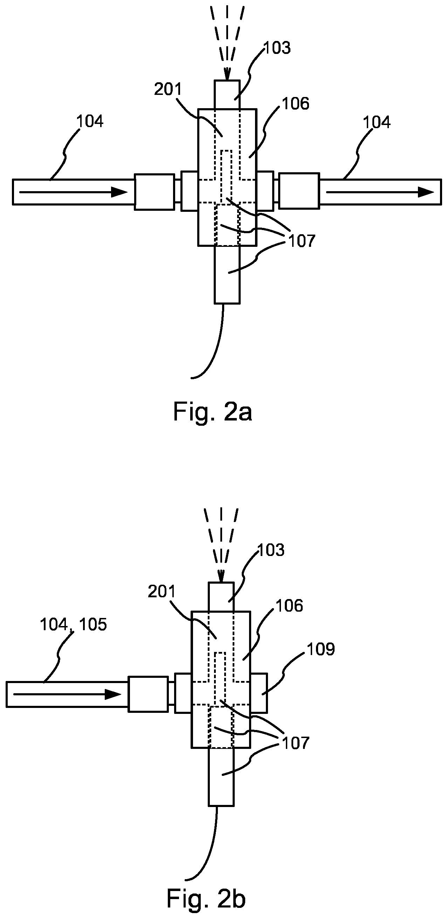

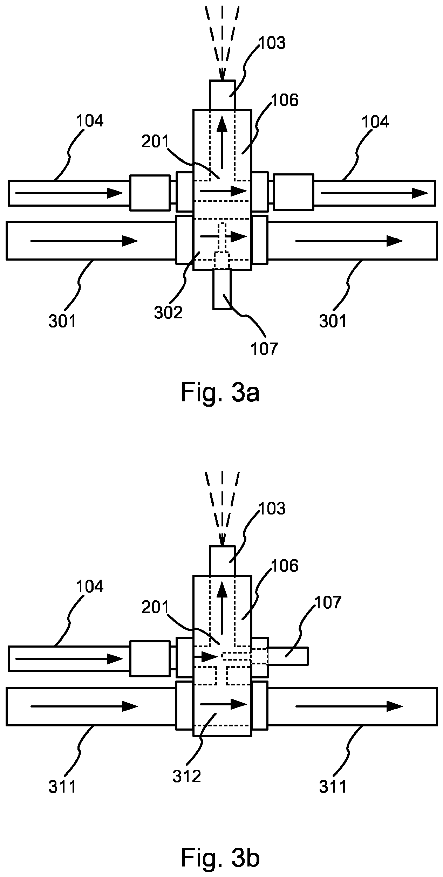

In the dust binding system 100 the nozzle block 106, the nozzle 103 fixed to the nozzle block and the glow plug 107 are preferably formed to a nozzle assembly. A first flow space 201 is arranged in the nozzle block to a through-flow channel for a dust binding liquid through-flow to a following nozzle block. The first flow space acts as a dust binding liquid distribution space in direction of the nozzle 103. Preferably connectors (an inlet connector and an outlet connector) are arranged to the nozzle block for the through-flow of the dust binding liquid. In an ending flow line the outlet connector is closed for example by a plug 109. The through-flow of the dust binding liquid through the first flow space 201 helps in the defrosting of the nozzle. The glow plug 109 enables unfreezing the nozzle and if necessary defrosting the nozzle. Examples of nozzle assemblies are shown in more detail in Figs. 2a, 2b, 3a and 3b.

Preferably the glow plug 107 is not heated when the dust binding liquid flows through the nozzle 103.

The system comprises electrical control means 108 for electricity supply and control of the glow plugs 107 in cold conditions. The control means 108 comprises for example a control unit and electricity cables between the glow plugs and the control unit. The nozzle blocks 106 are connected to each other preferably by intermediate channels 104. The intermediate channels are connected to the first flow space 201 formed in the nozzle block form where the dust binding liquid is allowed to flow to the nozzle and to continue to a following intermediate channel.

In the system of Fig. 1 the dust binding liquid comes during operation via the inlet channel 105 to the first nozzle block 106 from where part of the liquid is sprayed through the first nozzle 103. Dust binding liquid flows from the first nozzle block 106 via the intermediate channel 104 to the following nozzle block 106 where the flow is divided to a second nozzle and to a following intermediate channel 104 etc.

Preferably the nozzle block is of a material which has a good thermal conductivity, for example of a metal, wherein heat is conducted to the nozzle 103 via the nozzle block 106. Heat is conducted to the nozzle block from the dust binding liquid flowing in the first flow space. Heat is conducted to the nozzle block preferably in the flow channel leading to the nozzle 103 which flow channel is part of the first flow space 201 and where a tip of the glow plug is located. A particularly suitable material for the nozzle block is brass used in water fittings by which thermal conductivity can be intensified compared to steel material. Preferably the thermal conductivity of the nozzle block material is higher than the thermal conductivity of steel.

According to some embodiments the nozzle block is designed to be mounted to a commercial tubing support. In that way a retrofitting in place of existing nozzles is enabled.

According to some embodiments the nozzle block is formed to correspond a hydraulic connector in connecting dimensions wherein the glow plug is mounted in direction of a hydraulic tube or connector.

According to some embodiments the nozzle block is formed of a type of an angle mounting wherein the nozzle block is suitable for example for a nozzle of a conveyor discharge point.

Fig. 2a shows a nozzle assembly according to a first embodiment of the invention. In the first flow space 201 of the nozzle block the dust binding liquid is within a heating influence of the glow plug. The nozzle 103 is placed in the same nozzle block 106 as the glow plug 107. An electrical cable is fixed to a body of the glow plug 107 outside a nozzle body. The body is fixed by a thread to the nozzle block. The heatable tip part of the glow plug 107 is located in the first flow space 201, from where the flow is divided to a flow channel leading to the nozzle 103. The glow plug 103 heats locally the dust binding liquid flowing to the nozzle 103 by the first flow space 201 and by the material of the nozzle block.

Fig. 2b corresponds to the solution of Fig. 2a but a plug 109 is mounted in place of an outlet connector of the first flow space. In that case the glow plug 107 is suitable for defrosting an ending flow line 104, 105.

Figs. 3a and 3b show a nozzle assembly according to a preferred embodiment of the invention where the nozzle block 106, the nozzle 103 located in the nozzle block and the dust binding liquid in the first flow space 201 can be heated by a hydraulic fluid return/leakage flow flowing through the nozzle block 106. The hydraulic fluid is warmed up in a heat source of the processing plant.

The nozzle block 106 comprises a second flow space 302 which is separated from the first flow space 201. The hydraulic fluid heated during operation in the heat source can be guided to flow inside the nozzle block where heat is exchanged to the nozzle block. After that the hydraulic fluid flows out of the nozzle block for example to the following nozzle block. The second flow space 302 is connected for example in parallel with a hydraulic fluid return flow channel 301.

In Fig. 3a the nozzle 103 and the dust binding liquid in the first flow space 201 of the nozzle block are if desired within a heating influence of the nozzle block 106 which is heatable by the hydraulic fluid return flow. Also the leakage flow of the hydraulic system can be used in heating the nozzle block. The leakage flow is used for lubrication in the hydraulic system and this flow is warmer than the return flow and also is warmed up faster than the hydraulic fluid of the return flow.

The nozzle 103 is located in the same nozzle block 106 as the first flow space 201 and the second flow space 302. Heat is conducted to the material of the nozzle block from the dust binding liquid flowing in the first flow space 201 and if necessary from the hydraulic fluid flowing in the second flow space 302. Heat is conducted to the nozzle 103 from the material of the nozzle block and the dust binding liquid.

In the implementation of a nozzle assembly according to the preferred embodiment the first flow space 201 in Fig. 3a is heated by a glow plug as shown in Figs. 2a and 2b. If necessary the hydraulic fluid return/leakage flow can be used to defrost the nozzle 103 as shown in Fig. 3a. In this embodiment the tip of the glow plug is preferably located in the first flow space 201 but it can also be located in the second flow space 302 to heat the hydraulic fluid. If for example the return/leakage flow line becomes blocked because of too viscous lubrication oil damages may be caused in the hydraulic system such as in a hydraulic motor. Using the glow plug to heat up the second flow space 302 reduces a damaging risk of the hydraulic system in cold conditions.

Fig. 3b shows an implementation in which an evacuation of the dust binding liquid from the nozzle block is arranged by importing pressurized air into a flow space 312 through a pressurized air channel 311. The flow spaces 312 and 201 are connected to each other through an intermediate duct. The glow plug is arranged at the side of the first flow space 201.

In one operation mode of a system formed of the nozzle block of Fig. 3b a liquid pressure can be formed (additionally to the evacuation) during operation for the dust binding liquid by importing to the flow space 312 pressurized air through the pressurized air channel 311. In that case dust binding water and pressurized air combine in the first flow space, and steam for the dust binding is formed when a combination of liquid and air is heated.

The implementations shown in Figs. 3a and 3b can also be combined so that the nozzle block 106 comprises three flow spaces of which two (dust binding liquid-air) are connected to each other. The glow plug can be arranged to one flow space 201, 302, or to both of them.

The defrosting of the dust binding system is described in the following in connection with stopping and starting of the operation of the system.

At the end of the operation dust binding liquid mixed with anti-icing agent can be arranged to flow through the nozzle blocks 106 and the nozzles 103 until non-freezing liquid flows from all nozzles. When starting the dust binding system the nozzles are thus open thanks to the anti-icing agent, or the nozzles are quickly unfreezed by the glow plugs. A heavy circulating through-flow can be formed through the nozzle blocks 106 from one nozzle block to another wherein the anti-icing agent quickly fills the volume of the intermediate channels and the first flow spaces and the anti-icing agent does not have time to jet wasted needlessly.

In some cases the dust binding liquid can at the end of the operation be evacuated by pressurized air from the flow channels and the nozzles and the anti-icing agent is not necessarily used. Producing the pressurized air by an air compressor is costly in a work machine and using pressurized air can be avoided by the defrosting solutions described in this description. When the dust binding system is put into service, ice (frostwork) left in the dust binding liquid flow channels after a pressurized air evacuation can move to the nozzles and prevent the spraying of the dust binding liquid. In that case a local unfreezing by the glow plug provides a quick and inexpensive way to start the system in cold conditions.

In cold conditions (for example -30 °C) dust binding liquid strengthened with anti-icing agent can be circulated in the flow channels 105, 104, 201 at the beginning of the operation. If necessary the liquid flowing then in the closed dust binding liquid circuit can be pre-heated (for example in the container included in the circuit). The closed circuit has preferably a limited volume. The flow channels of the system can be driven warm with the pre-heated liquid, and first then dust binding liquid is taken from outside the closed circuit.

The glow plug used for defrosting the nozzle normally operates with a voltage of 12 V or 24 V and is heated in a couple of seconds to 1000 to 1500 °C. A voltage used typically in work machines is 22 to 28 V. A glow time is for example 10 to 15 seconds which is typical in car motors. The time can, however, be prolonged if the voltage is lower. The glow plug resists well pressure, liquid and vibration. The glow plug is easy to seal to the nozzle block and fix by a thread. Overheating of the plug is avoided in the defrosting solution by limiting the voltage and/or heating time, preferably automatically. The heat of the glow plug is transferred to the flowing dust binding liquid and the nozzle block.

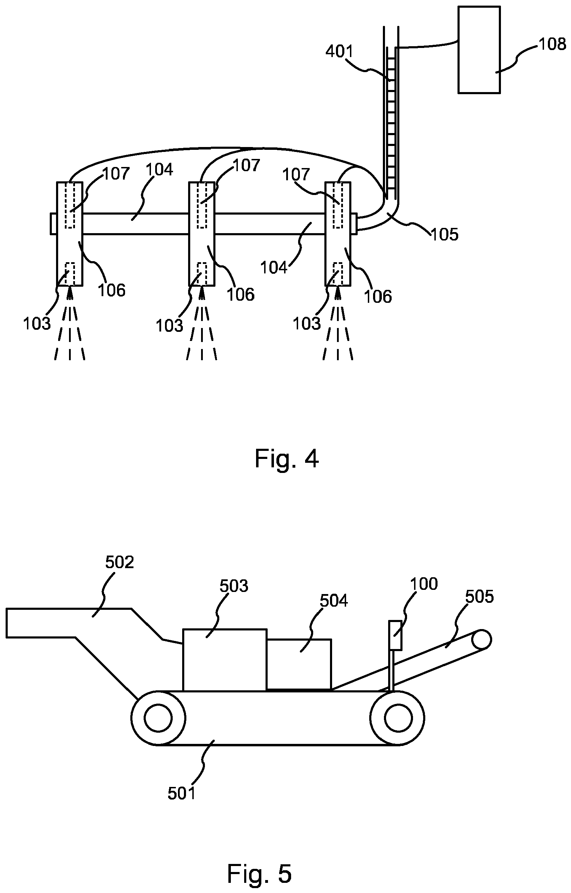

Fig. 4 shows a system for dust binding according to a preferred embodiment of the invention. The system of Fig. 1 is supplemented with a trace heating of a flow channel (preferably the inlet channel 105) which additionally is used as a pre-resistor for the glow plugs 107. The trace heating is arranged to a water spraying system (which is preferably a high pressure system) by a heating cable 401 for cold conditions operation. The object of the heating cable 401 is to ensure that the system recovers from a possible freezing (which may follow for example after a malfunction of the remaining system or a human error). A self-regulating DC-voltage resistance cable is used as the heating cable. The electrical resistance of the DC-voltage resistance cable depends on the length of the cable and the prevailing temperature. In the solution described with the example of Fig. 4 the pre-resistor required by the glow plug is implemented so that a trace heating cable having suitable length (typically about 3 m) is connected in series with the glow plug 107.

The glow plug is not operated directly with the voltage of the work machine because the glow plug would overheat. About 3 V is regulated as a suitable voltage by the self-regulating DC-voltage resistance cable which is connected in series, and by known electrical solutions (resistors, electrical auxiliary devices etc.).

An advantage of the invention is that the glow plug does not require any separate pre-resistor. The trace heating cable acts as both an electrical wire and the pre-resistor for the glow plug of the nozzle. The current consumed by the resistor can be exploited at the same time for heating of the inlet channel 105 and if necessary the intermediate channels 104 suitable for the length of the pre-resistor. In longer flow channels (inlet channels 105 and intermediate channels 104) part of the trace heating can be implemented by a normal connection and part by the pre-resistor connection described above.

Nozzle assemblies 103, 106, 107 and dust binding systems 100 according to the aspects and the embodiments of the invention shown with the examples of Figs. 1 to 4 can be used for example in the processing plant of Fig. 5.

Fig. 5 shows a movable crushing plant as an example of a mineral material processing plant. The processing plant comprises one or more conveyors to convey material from a feeding end to a discharge end. A crusher 503 is arranged as a main processing apparatus. The crusher can be for example a jaw crusher, a gyratory crusher, a cone crusher, a HSI crusher (horizontal shaft impactor), a VSI crusher (vertical shaft impactor) or a corresponding crusher suitable for stone crushing. The processing plant comprises a feeder 502 to feed the material to be processed to the crusher 503 and a conveyor 505 to convey the crushed material farther from the crushing plant.

The conveyor 505 comprises a belt 101 shown for example in Fig. 1 and the dust binding liquid is arranged in connection with the belt. The processing plant comprises also a motor 504 and a control unit. The motor may be a diesel motor which provides energy for process units, hydraulic circuits and the dust binding system. The motor may also be an electric motor.

The feeder 502, the crusher 503, the motor 504 and the conveyor 505 are fixed to a frame of the crushing plant comprising in the embodiment of Fig. 5 a track base 501 to move the plant. The processing plant may be entirely or partly wheel based or movable on legs. The processing plant may be movable/towable by a truck or another external power source.

The processing plant may also comprise a single conveyor or several conveyors, a so called pile conveyor or stacker.

The foregoing description provides non-limiting examples of some embodiments. Some of the features of the above-disclosed embodiments may be used to advantage without the use of other features.

As such, the foregoing description shall be considered as merely illustrative of principles of the invention, and not in limitation thereof. Hence, the scope of the invention is only restricted by the appended patent claims.

## Claims

1. A method for dust binding of mineral material in a mineral material processing plant, the method comprising conducting dust binding liquid through an inlet channel (105) and a nozzle block (106) to a nozzle (103) which is fixed to the nozzle block, and spraying dust binding liquid through the nozzle to a dust binding target to bind dust generated in mineral material processing, **characterized by** heating the dust binding liquid, the nozzle block and the nozzle (103) by a glow plug (107) which is fixed to the nozzle block (106).

2. The method according to claim 1, **characterized by** conducting the dust binding liquid through a first flow space (201) which is formed to the nozzle block (106) to flow to the nozzle (103) or to a first flow space formed to a following nozzle block.

3. The method according to claim 1, **characterized by** locating a tip of the glow plug (107) to a first flow space (201) formed to the nozzle block (106).

4. The method according to any of claims 1 to 3, **characterized by** forming a second flow space (302) to the nozzle block (106), the second flow space being separate to the first flow space, and conducting a flow of a liquid heated in a heat source of the processing plant through the second flow space, preferably a return flow of a hydraulic liquid.

5. The method according to claim 4, **characterized by** additionally locating a tip of a second glow plug (107) to the second flow space (302).

6. The method according to any of claims 1 to 5, **characterized by** circulating dust binding liquid through nozzle blocks in a closed circuit.

7. The method according to any of claims 1 to 6, **characterized by** arranging a trace heating cable (401) in connection with a dust binding liquid flow channel.

8. The method according to any of claims 1 to 7, **characterized by** limiting a voltage of the glow plug by coupling a trace heating cable as a pre-resistor for the glow plug, preferably a self-regulating DC-voltage resistance cable, the trace heating cable being arranged in connection with a dust binding liquid flow channel.

9. A system for binding dust generated in processing of mineral material in a mineral material processing plant, the system comprising an inlet channel (105), a nozzle block (106) and a nozzle (103) for spraying dust binding liquid, and the inlet channel and the nozzle are fixed to the nozzle block, **characterized in that** a glow plug (107) controllable by electrical control means (108) is fixed to the nozzle block (106) for heating the dust binding liquid, the nozzle block and the nozzle (103).

10. The system according to claim 9, **characterized in that** a first flow space (201) is formed to the nozzle block (106) for distributing dust binding liquid to the nozzle (103) or to a first flow space formed to a following nozzle block; and a tip of the glow plug (107) is located to the first flow space.

11. The system according to claim 9 or 10, **characterized in that** a second flow space (302) is arranged to the nozzle block (106), the second flow space being separate from the first flow space, for through-flow of a liquid heated in a heat source of the processing plant.

12. The system according to any of claims 9 to 11, **characterized in that** the system comprises a closeable dust binding liquid flow circuit which comprises flow channels, nozzle blocks, a container and a pump, and in the system the dust binding liquid is configured to circulate through nozzle blocks.

13. The system according to any of claims 9 to 12, **characterized in that** a trace heating cable (401) is arranged in connection with a dust binding liquid flow channel (104, 105), preferably a self-regulating DC-voltage resistance cable.

14. The system according to any of claims 9 to 13, **characterized in that** the electrical control means (108) comprise a trace heating cable (401) which is connected as a pre-resistor for the glow plug (107).

15. A mineral material processing plant comprising at least one mineral material processing apparatus and a system for dust binding according to any of claims 9 to 14.

16. The mineral processing plant according to claim 15, **characterized in that** the mineral processing plant is a movable mineral processing plant comprising a feeder and/or a screen and/or a crusher and/or a conveyor.

17. The method according to any of claims 1 to 8, **characterized in that** the nozzle is a high pressure nozzle.

18. The system according to any one of claims 9-14, **characterized in that** the nozzle is a high pressure nozzle.

## Patentansprüche

1. Verfahren zum Binden von Staub eines mineralischen Materials in einer Mineralmaterialverarbeitungsanlage, wobei des Verfahren umfasst: Leiten von Staubbindeflüssigkeit durch einen Einlasskanal (105) und einen Düsenblock (106) zu einer Düse (103), welche an dem Düsenblock befestigt ist, und Sprühen von Staubbindeflüssigkeit durch die Düse auf ein Staubbindeziel, um bei der Mineralmaterialverarbeitung erzeugten Staub zu binden, **gekennzeichnet durch** Erhitzen der Staubbindeflüssigkeit, des Düsenblocks und der Düse (103) **durch** eine Glühkerze (107), welche an dem Düsenblock (106) befestigt ist.

2. Verfahren gemäß Anspruch 1, **gekennzeichnet durch** Leiten der Staubindeflüssigkeit durch einen ersten Strömungsraum (201), welcher an dem Düsenblock (106) gebildet ist, um zu der Düse (103) oder zu einem ersten Strömungsraum, der an einem folgenden Düsenblock gebildet ist, zu strömen.

3. Verfahren gemäß Anspruch 1, **gekennzeichnet durch** Anordnen einer Spitze der Glühkerze (107) an einem ersten Strömungsraum (201), der an dem Düsenblock (106) gebildet ist.

4. Verfahren gemäß einem der Ansprüche 1 bis 3, **gekennzeichnet durch** Bilden eines zweiten Strömungsraumes (302) an dem Düsenblock (106), wobei der zweite Strömungsraum von dem ersten Strömungsraum getrennt ist, und Leiten eines Stromes einer Flüssigkeit, die in einer Wärmequelle der Verarbeitungsanlage erhitzt wurde, **durch** den zweiten Strömungsraum, bevorzugt eines Rückstroms einer Hydraulikflüssigkeit.

5. Verfahren gemäß Anspruch 4, **gekennzeichnet durch** zusätzliches Anordnen einer Spitze einer zweiten Glühkerze (107) an dem zweiten Strömungsraum (302).

6. Verfahren gemäß einem der Ansprüche 1 bis 5, **gekennzeichnet durch** Zirkulieren von Staubbindeflüssigkeit **durch** die Düsenblöcke in einem geschlossenen Kreis.

7. Verfahren gemäß einem der Ansprüche 1 bis 6, **gekennzeichnet durch** Einrichten eines Begleitheizungskabels (401) in Verbindung mit einem Staubbindeflüssigkeitskanal.

8. Verfahren gemäß einem der Ansprüche 1 bis 7, **gekennzeichnet durch** Begrenzen einer Spannung der Glühkerze **durch** Koppeln eines Begleitheizungskabels als einen Vorwiderstand für die Glühkerze, bevorzugt ein selbstregulierendes Gleichspannungswiderstandskabel, wobei das Begleitheizungskabel in Verbindung mit einem Staubbindeflüssigkeitsströmungskanal eingerichtet ist.

9. System zum Binden von Staub, der bei der Verarbeitung von mineralischem Material in einer Mineralmaterialverarbeitungsanlage erzeugt wird, wobei das System einen Einlasskanal (105), einen Düsenblock (106) und eine Düse (103) zum Sprühen von Staubbindeflüssigkeit umfasst, und wobei der Einlasskanal und die Düse an dem Düsenblock befestigt sind, **dadurch gekennzeichnet, dass** eine Glühkerze (107), die durch ein elektrisches Steuermittel (108) steuerbar ist, an dem Düsenblock (106) zum Erhitzen der Staubbindeflüssigkeit, des Düsenblocks und der Düse (103) befestigt ist.

10. System gemäß Anspruch 9, **dadurch gekennzeichnet, dass** ein erster Strömungsraum (201) an dem Düsenblock (106) gebildet ist, zum Verteilen von Staubbindeflüssigkeit zu der Düse (103) oder zu einem ersten Strömungsraum, der an einem folgenden Düsenblock gebildet ist; und wobei eine Spitze der Glühkerze (107) an dem ersten Strömungsraum angeordnet ist.

11. System gemäß Anspruch 9 oder 10, **dadurch gekennzeichnet, dass** ein zweiter Strömungsraum (302) an dem Düsenblock (106) eingerichtet ist, wobei der zweite Strömungsraum von dem ersten Strömungsraum getrennt ist, um eine Flüssigkeit, die in einer Wärmequelle der Verarbeitungsanlage erhitzt wurde, durchströmen zu lassen.

12. System gemäß einem der Ansprüche 9 bis 11, **dadurch gekennzeichnet, dass** das System einen schließbaren Staubbindeflüssigkeits-Strömungskreis umfasst, welcher Strömungskanäle, Düsenblöcke, einen Behälter und eine Pumpe umfasst, und wobei in dem System die Staubbindeflüssigkeit konfiguriert ist, durch die Düsenblöcke zu zirkulieren.

13. System gemäß einem der Ansprüche 9 bis 12, **dadurch gekennzeichnet, dass** ein Begleitheizungskabel (401) in Verbindung mit einem Staubbindeflüssigkeitsströmungskanal (104, 105) eingerichtet ist, bevorzugt ein selbstregulierendes Gleichspannungswiderstandskabel.

14. System gemäß einem der Ansprüche 9 bis 13, **dadurch gekennzeichnet, dass** das elektrische Steuermittel (108) ein Begleitheizungskabel (401) umfasst, welches als ein Vorwiderstand für die Glühkerze (107) verbunden ist.

15. Mineralmaterialverarbeitungsanlage umfassend mindestens eine Mineralmaterialverarbeitungsvorrichtung und ein System zum Binden von Staub gemäß einem der Ansprüche 9 bis 14.

16. Mineralverarbeitungsanlage gemäß Anspruch 15, **dadurch gekennzeichnet, dass** die Mineralverarbeitungsanlage eine bewegbare Mineralverarbeitungsanlage ist, die ein Zuführgerät und/oder ein Sieb und/oder einen Brecher und/oder einen Förderer umfasst.

17. Das Verfahren gemäß einem der Ansprüche 1 bis 8, **dadurch gekennzeichnet, dass** die Düse eine Hochdruckdüse ist.

18. Das System gemäß einem der Ansprüche 9-14, **dadurch gekennzeichnet, dass** die Düse eine Hochdruckdüse ist.

## Revendications

1. Procédé permettant de lier de la poussière de matière minérale dans une usine de traitement de matière minérale, le procédé comprenant les étapes consistant à conduire un liquide de liaison de poussière à travers un canal d'entrée (105) et un bloc de buses (106) jusqu'à une buse (103) qui est fixée au bloc de buses, et pulvériser du liquide de liaison de poussière à travers la buse vers une cible de liaison de poussière pour lier la poussière générée dans le traitement de matière minérale, **caractérisé par** l'étape consistant à chauffer le liquide de liaison de poussière, le bloc de buses et la buse (103) au moyen d'une bougie de préchauffage (107) qui est fixée au bloc de buses (106).

2. Procédé selon la revendication 1, **caractérisé par** l'étape consistant à conduire le liquide de liaison de poussière à travers un premier espace d'écoulement (201) qui est formé dans le bloc de buses (106) pour s'écouler jusqu'à la buse (103) ou jusqu'à un premier espace d'écoulement formé dans un bloc de buses suivant.

3. Procédé selon la revendication 1, **caractérisé par** l'étape consistant à placer une pointe de la bougie de préchauffage (107) dans un premier espace d'écoulement (201) formé dans le bloc de buses (106).

4. Procédé selon l'une quelconque des revendications 1 à 3, **caractérisé par** l'étape consistant à former un second espace d'écoulement (302) dans le bloc de buses (106), le second espace d'écoulement étant séparé du premier espace d'écoulement, et conduisant un écoulement d'un liquide chauffé dans une source de chaleur de l'installation de traitement au travers du second espace d'écoulement, de préférence un écoulement de retour d'un liquide hydraulique.

5. Procédé selon la revendication 4, **caractérisé par** l'étape consistant à placer de manière additionnelle une pointe d'une seconde bougie de préchauffage (107) dans le second espace d'écoulement (302).

6. Procédé selon l'une quelconque des revendications 1 à 5, **caractérisé par** l'étape consistant à faire circuler du liquide de liaison de poussière au travers des blocs de buses en circuit fermé.

7. Procédé selon l'une quelconque des revendications 1 à 6, **caractérisé par** l'étape consistant à agencer un câble chauffant par traçage électrique (401) en connexion avec un canal d'écoulement de liquide de liaison de poussière.

8. Procédé selon l'une quelconque des revendications 1 à 7, **caractérisé par** l'étape consistant à limiter une tension de la bougie de préchauffage en raccordant un câble chauffant par traçage électrique en tant que pré-résistance pour la bougie de préchauffage, de préférence un câble à résistance à tension continue autorégulant, le câble chauffant par traçage électrique étant agencé en connexion avec un canal d'écoulement de liquide de liaison de poussière.

9. Système permettant de lier de la poussière générée pendant le traitement d'une matière minérale dans une usine de traitement de matière minérale, le système comprenant un canal d'entrée (105), un bloc de buses (106) et une buse (103) pour pulvériser du liquide de liaison de poussière, et le canal d'entrée et la buse sont fixés au bloc de buse, **caractérisé en ce qu'**une bougie de préchauffage (107) pouvant être commandée par des moyens de commande électriques (108) est fixée au bloc de buses (106) pour chauffer le liquide de liaison de poussière, le bloc de buses et la buse (103).

10. Système selon la revendication 9, **caractérisé en ce qu'**un premier espace d'écoulement (201) est formé dans le bloc de buses (106) pour distribuer du liquide de liaison de poussière à la buse (103) ou à un premier espace d'écoulement formé dans un bloc de buses suivant ; et une pointe de la bougie de préchauffage (107) est située dans le premier espace d'écoulement.

11. Système selon la revendication 9 ou 10, **caractérisé en ce qu'**un second espace d'écoulement (302) est agencé dans le bloc de buses (106), le second espace d'écoulement étant séparé du premier espace d'écoulement, pour l'écoulement traversant d'un liquide chauffé dans une source de chaleur de l'usine de traitement.

12. Système selon l'une quelconque des revendications 9 à 11, **caractérisé en ce que** le système comprend un circuit d'écoulement de liquide de liaison de poussière pouvant être fermé, qui comprend des canaux d'écoulement, des blocs de buses, un récipient et une pompe, et dans lequel le liquide de liaison de poussière est configuré pour circuler à travers des blocs de buse.

13. Système selon l'une quelconque des revendications 9 à 12, **caractérisé en ce qu'**un câble de chauffage par traçage électrique (401) est agencé en connexion avec un canal d'écoulement de liquide de liaison de poussière (104, 105), de préférence un câble de résistance à tension continue autorégulant.

14. Système selon l'une quelconque des revendications 9 à 13, **caractérisé en ce que** les moyens de commande électrique (108) comprennent un câble de chauffage par traçage électrique (401) qui est connecté en tant que pré-résistance pour la bougie de préchauffage (107).

15. Usine de traitement de matière minérale comprenant au moins un appareil de traitement de matière minérale et un système permettant de lier la poussière selon l'une quelconque des revendications 9 à 14.

16. Usine de traitement des minerai selon la revendication 15, **caractérisée en ce que** l'usine de traitement de minerai est une usine de traitement de minerai mobile comprenant un dispositif d'alimentation et / ou un crible et / ou un concasseur et / ou un convoyeur.

17. Procédé selon l'une quelconque des revendications 1 à 8, **caractérisé en ce que** la buse est une buse haute pression.

18. Système selon l'une quelconque des revendications 9 à 14, **caractérisé en ce que** la buse est une buse à haute pression.
